Europäisches Patentamt

European Patent Office

Office européen des brevets

(19)

(11) Publication number: **0 021 514**
**B1**

## (12) EUROPEAN PATENT SPECIFICATION

(45) Date of publication of patent specification: **13.06.84**

(21) Application number: **80200555.3**

(22) Date of filing: **13.06.80**

(51) Int. Cl.³: **G 03 B 27/62,**
**G 03 G 15/00**

(54) Original feeding procedure for a copying machine and device for carrying out said procedure.

(30) Priority: **27.06.79 NL 7904987**

(43) Date of publication of application:
**07.01.81 Bulletin 81/1**

(45) Publication of the grant of the patent:
**13.06.84 Bulletin 84/24**

(84) Designated Contracting States:
**BE CH DE FR GB IT LI NL SE**

(56) References cited:
**DE - A - 2 805 674**

**IBM TECHNICAL DISCLOSURE BULLETIN, vol.
19, no. 12, May 1977, New York, USA M.K.
BULLOCK: "Duplex document feeder", page
4496**

(73) Proprietor: **Océ-Nederland B.V.**
**St. Urbanusweg 102**
**NL-5914 CC Venlo (NL)**

(72) Inventor: **Hidding, Gerhard**
**Grimmstraat 16**
**Venlo (NL)**

(74) Representative: **Bleukx, Lucas Lodewijk Maria, Ir.**
**et al,**
**Océ-Nederland B.V. Patents & Information Dept.**
**Postbus 101**
**NL-5900 MA Venlo (NL)**

Courier Press, Leamington Spa, England.

## Description

The invention relates to an original feed device for a copying machine, the said device being provided with a holder for stacking originals, means for removing the bottom original from the holder, an illumination station with an entry and exit side, a first transport path for transporting the original from the holder to the entry side of the illumination station, a second transport path for placing the original back on top in the holder and a reversing device in which the leading and trailing edge of the original are exchanged including an inlet section for receiving an original fed from the exit side of said station, an outlet section for delivering the original in inverted position to the entry side of the illumination station and a reversing section for reversing the direction of motion of the original.

These devices are designed for assembly on a copying machine and make it possible to automatically copy several times originals which contain, on both sides, text to be copied. For this purpose the originals are stacked in sequence and are taken one by one from the bottom of the stack and one side of each original is transported past the illumination station, and reversed, the other side is transported in the same direction past the illumination station and is placed back in its original position on top of the stacked originals. When copying multi-sheet documents the entire document is always copied before a following copy of the document is produced.

This method of operation has the advantage that, without a collating device, all copies are supplied in the precise sequence by the copying machine.

Such a device is known from the German Offenlegungsschrift 27 23 458. In accordance with this application a stack of sheet-like originals are placed in numerical sequence with the first page upwards and before the commencement of the copying process a new stack is formed by removing the lowest sheet on each occasion, reversing this sheet and placing it on the new stack. As a result the sequence in the second stack from top to bottom is 2, 1, 4, 3, 6, 5 etc. Copying of both sides of an original is carried out by removing the bottom sheet from the new stack, reversing the sheet, and first passing the sheet with the side that was faced upwards in the new stack past an illumination station. Subsequently the sheet is again reversed and its direction of movement is reversed and after a second transport operation past the illumination station both the sheet and the direction of movement are reversed yet again before the sheet can be placed in the correct sequence on the second stack.

This known device has, inter alia the disadvantage that a preparatory stage is required, comprising the removal one by one of the originals and laying them down in reverse. Furthermore, in order to perform the second and third reversals during the copying process extra means are required. This not only costs time, but also supplies extra sources of possible disturbances and imposes an extra burden on the originals.

Furthermore with the known device it is not possible under all circumstances to deal with single-sided originals at the same time as double-sided originals. During the double-sided copying of an uneven number of single-sided originals, the first page is of course copied without a second page, and further an even page is always copied with a following uneven page on one sheet. This can be regarded as a short-coming, because the conventional way is to place an uneven page with the following even page on one sheet. Under such circumstances another sequence for the originals should be capable of being selected but to avoid oversights it is desirable that in all cases it should be possible to process originals with the same sequence of the originals and the same position of the stack.

The invention consists in a device in which the originals are subjected to a minimum burden and the difficulties mentioned above are avoided. The invention comprises a device as described in the preamble characterised in that the first transport path is a transport path which conveys each original to be copied to the illumination station in a position for copying initially the side that faced downwards in the holder, that the second transport path is connected to the outlet section or the reversing section of the reversing device and that a return path section is provided between the outlet section of the reversing device and the first transport path, the outlet of said return path in the first transport path being directed toward the entry side of the illumination station.

The device in accordance with the invention has the advantage that the original is subjected to as few processing operations as possible and thus is subjected to minimum wear. Furthermore, regardless of whether single-sided or double-sided originals are to be copied, it is always possible to place the stack of originals in the holder with the first page facing downwards. This stack position is preferred, although it is not essential for copying double-sided originals.

Peferably in the device in accordance with the invention a direct transport connection is provided, parallel with the reversing device, between the inlet and outlet section of the reversing device, whereby a continuous path is formed between the entry and exit side of the illumination station.

This preferred embodiment offers the advantage that also one side of a single original can be copied several times without this original needing to be conveyed on each occasion via the holder. An original feed device, which conveys each original to be copied to the illumination station in a position for copying initially the side that faced downward in the holder, is known per se. German Patent Application 28 05 674 discloses such a device in which the original, after copying one side of it, is reversed in a reversing device which does not exchange the leading and trailing edge of the original. For copying the opposite side of the original, said original is transported in an opposite direction past the illumination station and is then returned to the holder. The known device has a disadvantage in that, in copying of single sided originals, the originals must also be transported twice past the illumination station. As a result the copying speed is limited.

The invention will now be discussed in greater detail with the aid of the following Figures.

Fig. 1 is a schematic section through a device for carrying out the procedure in accordance with the invention.

Fig. 2 is a schematic view of the path followed by the originals in the device shown in fig. 1.

Fig. 3 is a schematic section through an alternative device for carrying out the procedure in accordance with the invention.

Fig. 4 is a schematic view of the path followed by the originals in the device shown in fig. 3.

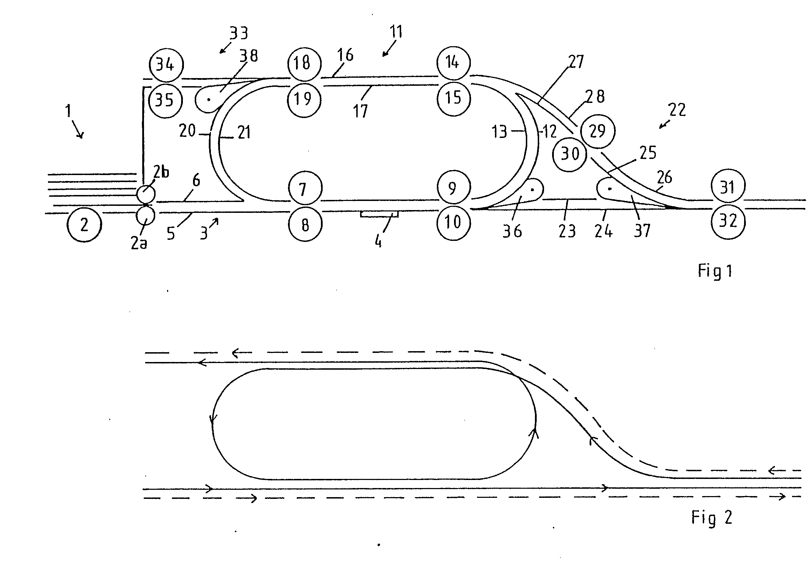

The device shown in fig. 1 comprises a holder 1 with a transport roller 2 in the base and a straight first transport path 3 which extends, in a flat surface in the extension of the base of the holder, from the holder and past an illumination station 4. Between the holder 1 and the first transport path 3 a sheet separation device is incorporated consisting of two rollers 2a and 2b located one above the other, of which the bottom one can transport an original in the first transport path, and the top one can rotate in the opposite direction and thus checks a second original which is possibly-co-conveyed. Viewed in the direction of transportation, this straight transport path comprises a sequence of two parallel-fastened flat guide plates 5 and 6, a pair of transport rollers 7, 8 two flat guide plates with a recess in the bottom plate for the illumination station 4 and a pair of transport rollers 9, 10. A continuous path 11 partially coincides with the first transport path, but on the side of the illumination station facing away from the holder bends away from the surface of the first transport path, extending in loop fashion over the illumination station, then merging into the first transport path once again between the illumination station and the holder. This continuous transport path comprises, one after the other, a set of semi-cylindrical bent guideplates 12 and 13, a pair of transport rollers 14, 15, two parallel flat guideplates 16 and 17, a pair of transport rollers 18, 19, and a second set of semi-cylindrical bent guideplates 20 and 21. A reversing device 22 which is shaped like a two-legged fork is attached by both legs to the continuous path. The first leg consists of two parallel straight guideplates 23 and 24 in the extension of the first transport path. The second leg comprises two sets of slightly curved guideplates 25, 26 and 27, 28 with a pair of transport rollers 29, 30 located between them. The handle of the fork is provided with a pair of transport rollers 31, 32, the direction of rotation of which is reversible. Between the continuous path and the top of the holder 1 there is a second transport path 33 which is branched off from the continuous path. This transport path comprises flat guideplates which incorporate a pair of transport rollers 34, 35. A switch 36 is mounted in the angle between the guideplates 12 and 23. A switch 37 is mounted in the angle between the guideplates 23 and 25, and a switch 38 in the branch from the means of transport 33.

A stack of originals, where the sheets are in numerical order, is placed in the original holder 1 with the first page of the first sheet facing downwards. With the aid of transport roller 2 and separation rollers 2a and 2b the bottom original is conveyed to the illumination station 4 via the straight first transport path 3. After passing the illumination station, the original passes underneath the switches 36 and 37, which have previously been lifted upwards, and is guided in the handle of the fork-shaped branch 22 by the pair of transport rollers 31, 32. When most of the original has passed this pair of transport rollers, the switch 37 is swivelled downwards, (in the position shown) and the direction of rotation of the pair of transport rollers 31, 32 is reversed. As a result the original leaves the fork-shaped branch in the reverse direction past the top side of the switch 37 via the second leg of this fork. The original is subsequently further transported in the continuous path by means of the pair of transport rollers 14, 15 and 18, 19 and during this passes the third switch 38 which has previously been lifted upwards (as shown in fig. 1). In this position the switch closes the entry to the means of transport 33 and the original is bent downwards between the curved guideplates 20, 21 and is returned to the illumination station 4 via the pair of transport rollers 7 and 8. The original now passes, with its second side facing downwards, the illumination station and is bent upwards by the switch 36 which in the meantime has been swivelled downwards. The original which has thus been brought once again into the continuous path 11 passes on top of switch 38 which in the meantime has swivelled downwards and by means of the pair of transport rollers 34, 35 is placed on top of the stack in the holder 1.

In fig. 2 the route taken by the original in the device in accordance with fig. 1 is indicated by full lines. The interrupted lines indicate the route for an original where only one side needs to be copied. In the latter-mentioned route the original follows the path between the guideplates and the pairs of transport rollers in the same way as a double-sided original, but here the third switch 38 is constantly maintained in the lowest position, so that the second conveyance past the illumination station is dispensed with an the original is laid directly in the holder 1 from the continuous path 11. It is also possible to copy a single original a number of times by allowing it to circulate repeatedly through the continous path.

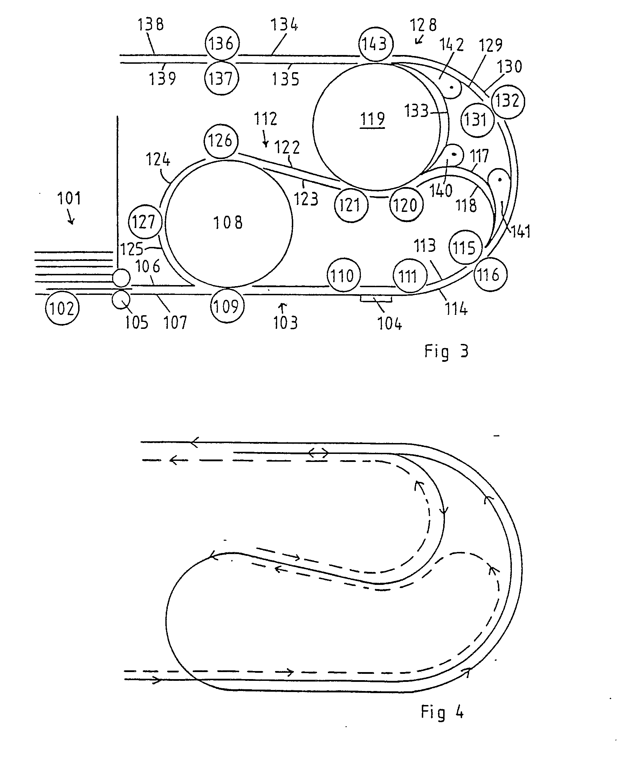

The device in accordance with fig. 3 comprises a holder 101 with a transport roller 102 in the base and a straight first transport path 103 which extends in a flat surface in the extension of the base of the holder from the holder to an illumination station 104. Between the straight first transport path 103 and the holder 101 there is a sheet separation device 105 consisting of two rollers located one above the other, the lower of which can transport an original in the first transport path whilst the top one holds back any second original which may be co-conveyed at the same time by rotating in the opposite direction. The transport path 103 comprises two parallel plates 106 and 107 with openings in which are placed a pair of transport rolls 108, 109 and two transport rolls 110 and 111 the latter rolls being directly before and after the illumination station. A continuous transport path 112 coincides partially with the first transport path and, as from roller 111, near the exit side of the illumination station, this comprises in sequence an initial curved trajectory, a straight and a second curved trajectory which near roller 109 once more merges into the straight first transport path. The initial curved trajectory is shaped from two curved guideplates 113 and 114, a pair of transport rollers 115, 116, two curved guideplates 117 and 118, and a portion of the surface of a large transport roller 119 with two smaller rollers 120 and 121 which interact therewith. The straight trajectory consists of two parallel flat guideplates 122 and 123 and the second curved trajectory is formed on the inside by the surface of the transport roller 108 and on the outside by semi-cylindrical bent guideplates 124 and 125 which incorporate two transport rolls 126 and 127 which interact with the roller 108.

A reversing device 128 shaped like a two-legged fork is connected, at the ends of the curved guideplates 117 and 118, by both legs to the continuous path. The leg on the outside includes two curved guideplates 129 and 130, in which a pair of transport rollers 131, 132 is located. The second leg is formed by a portion of the surface of the large transport roller 119 and a guideplate 133 placed near its surface. The handle of the two-legged fork consists of two parallel flat guideplates 134 and 135 which are placed parallel with the first transport path and above it. A second transport path is located in the extension of the guideplates 134 and 135 and consists of a pair of transport rollers 136, 137 and two flat guideplates 138 and 139 which extend to near the top side of the holder 101. A switch 140 and 141 is mounted between the continuous path and each of the two legs of the reversing device. A third switch 142 is located in the angle between both legs of the reversing device. A roller 143, which interacts with the large roller 119, is also provided near this angle at the top.

A stack of originals, the sheets of which are in numerical order, is placed in the original holder 101 with the first page of the first sheet facing downwards. By means of the transport roller 102 and the pair of separation rollers 105 the original is conveyed via the straight first transport path 103 to the illumination station 104. After passing the illumination station the original is transported by the outer leg of the reversing device. During this the switches 141 and 142 which are located in this path are swivelled (in the position shown). After the original has arrived between the guideplates 134 and 135, switch 142 is swivelled outwards and the direction of rotation of the pairs of transport rollers 119, 143 and 136, 137 is reversed. The original is now transported back in the reverse direction, via the second leg of the reversing device in which the switch 140 has been swivelled downwards, in the continuous path and from this to the illumination station 104 and subsequently via the first (outermost) leg of the reversing device, the switch 142 which has again been swivelled downwards, and the guideplates 138 and 139 to the top of the holder 101 and placed on the stack.

Fig. 4 shows by full lines the route taken by the original in the device in accordance with fig. 3. The dashed lines indicate the route taken by an original of which only one side needs to be copied. During the latter route the major portion of the path through the outer leg of the reversing device is missed and the original is transported between the guideplates 117 and 118 via the switch 141 which for this purpose has been swivelled outwards. After passing the lifted switch 140 (in the position shown) this switch is swivelled downwards and the direction of movement of the transport rollers 119, 120 and 121 is reversed. As a result the original is conveyed in the reverse direction along roller 119 to the second transport path and is subsequently placed in the holder 101.

In the embodiments shown in fig. 1 and 3 the originals do not need to be fed one by one through the device. After one side of the first original has passed by the illumination station, a second original can be transported towards the illumination station whilst in the meantime the first is reversed.

With the devices in accordance with the invention it is also simple to copy a single original a number of times by conveying it a number of times through the continuous path. For this purpose the original thus does not need to be conveyed on each occasion via the holder to the illumination station. This is important particularly for copying machines in which slot illumination systems with moving originals are used. In copying machines in which a stationary original is illuminated it is not necessary to have this continuous path for the repeated copying of a single original, because in those cases the original can be kept still until it has been illuminated a number of times by a moving slot illumination system or an integral illumination system. In such cases it is also possible to use an alternative embodiment of the device shown in fig. 3 in which the switches 140 and 141 and the guideplates 117 and 118 are omitted. The route taken for double-sided copying is here the same as that in the device shown in fig. 3. During single-sided copying in this case the original must, via a branch on the second transport path be transported in a loop over the holder 101 and then must be placed in the holder from the side which is opposite to the original stacked side.

## Claims

1. Original feed device for a copying machine, the said device being provided with a holder (1, 101) for stacking originals, means (2, 2a, 2b, 102, 105) for removing the bottom original from the holder, an illumination station (4, 104) with an entry and exit side, a first transport path (3, 103) for transporting the original from the holder to the entry side of the illumination station, a second transport path (33, 138, 139) for placing the original back on top in the holder and a reversing device (22, 128) in which the leading and trailing edge of the original are exchanged including an inlet section (23, 24, 113, 114, 129, 130) for receiving an original fed from the exit side of said station, an outlet section (16, 17, 25 up to 28, 133) for delivering the original in inverted position to the entry side of the illumination station and a reversing section (31, 32, 134, 135, 143) for reversing the direction of motion of the original characterised in that the first transport path (3, 103) is a transport path which conveys each original to be copied to the illumination station in a position for copying initially the side that faced downward in the holder, that the second transport path (33, 138, 139) is connected to the outlet section (16, 17, 25 up to 28, 133) or the reversing section (31, 32, 134, 135, 143) of the reversing device and that a return path section (18, 19, 20, 21, 122 up to 125) is provided between the outlet section of the reversing device and the first transport path, the outlet of said return path in the first transport path being directed toward the entry side of the illumination station.

2. Original feed device as in claim 1, characterised in that a direct transport link (12, 13, 117, 118) is provided between the inlet and outlet section of the reversing device, whereby a continuous path (11, 12) is formed between the entry and exit side of the illumination station.

3. A method of transporting originals in sequence from a stack of originals to the illumination station of a copying machine, which comprises taking the originals one by one from the bottom of the stack, initially transporting each original past the illumination station from an entry side to an exit side for copying one side of the original, returning the original from the exit side to the entry side by way of a return path and a reversing path in which the leading and trailing edge of the original are exchanged, transporting the original again past the illumination station in the same direction for copying the other side of the original and then transporting it back to the stack characterised in that each original is initially transported past the illumination station in a position for copying the side of the original that faced downward in the stack and that, after copying said side, the original is returned from the exit side to the entry side of the illumination station by passing first through the reversing path and then through the return path.

## Revendications

1. Dispositif d'acheminement d'originaux pour machine à copier, le dispositif étant muni d'un support (1, 101) pour epiler les originaux, de moyens (2, 2a, 2b, 102, 105) pour retirer du support l'original situé au fond, un poste d'illumination (4, 104) comportant un côté d'entrée et un côté de sortie, un premier trajet de transport (3, 103) destiné à transporter l'original du support vers le côté d'entrée du poste d'illumination, un second trajet de transport (33, 138, 139) pour ramener l'original sur le dessus du support, et un dispositif de retournement (22, 128), dans lequel les bords d'attaque et de fuite de l'original sont interchangés, comprenant une section d'entrée (23, 24, 113, 114, 129, 130) destinée à recevoir un original acheminé à partir du côté de sortie dudit poste, une section de sortie (16, 17, 25 à 28, 133) destinée à délivrer l'original en position retournée au côté d'entrée du poste d'illumination, et une section de retournement (31, 32, 134, 135, 143) destinée à inverser la direction du déplacement de l'original, caractérisé en ce que le premier trajet de transport (3, 103) est un trajet de transport qui convoie chaque original destiné à être copié vers le poste d'illumination, dans une position telle que la face tournée vers le bas dans le support est initialement copiée, en ce que le second trajet de transport (33, 138, 139) est relié à la section de sortie (16, 17, 25 à 28, 133) ou à la section de retournement (31, 32, 134, 135, 143) du dispositif de retournement, et en ce qu'une section de trajet de retour (18, 19, 20, 21, 122 à 125) est prévue entre la section de sortie du dispositif de retournement et le premier trajet de transport, la sortie dudit trajet de retour vers le premier trajet de transport étant dirigée vers le côté d'entrée du poste d'illumination.

2. Dispositif d'acheminement d'originaux selon la revendication 1, caractérisé en ce qu'une liaison de transport directe (12, 13, 117, 118) est prévue entre les sections d'entrée et de sortie du dispositif de retournement, un trajet continu (11, 12) étant ainsi formé entre les côtés d'entrée et de sortie du poste d'illumination.

3. Procédé d'acheminement d'originaux séquentiellement à partir d'une pile d'originaux vers le poste d'illumination d'une machine à copier, dans lequel on prend les originaux un par un à partir du fond de la pile, on transporte initialement chaque original au devant du poste d'illumination d'un côté d'entrée vers un côté de sortie pour copier une face de l'original, on ramène l'original du côté de sortie vers le côté d'entrée au moyen d'un trajet de retour et d'un trajet de retournement dans lequel les bords d'attaque et de fuite de l'original sont interchangés, on transporte à nouveau l'original au devant du poste d'illumination, dans le même sens, pour copier, l'autre face de l'original, puis on le ramène vers la pile, caractérisé en ce que chaque original est initialement transporté au devant du poste d'illumination dans une position telle que c'est la face de l'original tournée vers le bas dans la pile qui est copiée, et en ce que, après la copie de cette face, l'original est ramené du côté de sortie vers le côté d'entrée du poste d'illumination en passant tout d'abord sur le trajet de retournement, puis sur le trajet de retour.

## Patentansprüche

1. Vorrichtung für eine Originalzufuhr zu einer Kopiermaschine, welche Vorrichtung mit einem Halter (1, 101) zum Stapeln von Originalen versehen ist, mit einer Einrichtung (2, 2a, 2b, 102, 105) zum Entfernen des untersten Originals aus dem Halter, mit einer Beleuchtungsstation (4, 104) mit einer Eingangs- und Ausgangsseite, mit einer ersten Transportbahn (3, 103) zum Transport des Originals von dem Halter zu der Eingangsseite der Beleuchtungsstation, mit einer zweiten Transportbahn (33, 138, 139) zum Zurücklegen des Originals in die Oberseite des Halters und mit einer Umkehreinrichtung (22, 128) in der die führende und die nachlaufende Kante des Originals ausgetauscht werden und die einen Einlassabschnitt (23, 24, 113, 114, 129, 130) aufweist, um ein von der ausgangsseite der Station zugeführtes Original aufzunehmen, mit einem Auslassabschnitt (16, 17, 25—28, 133) zur Zufuhr des Originals in umgekehrter Lage zu der Eingangsseite der Beleuchtungsstation, sowie mit einem Umkehrabschnitt (31, 32, 134, 135, 143) für eine Richtungsumkehr der Bewegung des Originals, dadurch gekennzeichnet, dass die erste Transportbahn (3, 103) eine Transportbahn zur Förderung jedes zu kopierenden Originals in die Beleuchtungsstation ist in einer Lage zum anfänglichen Kopieren der Seite, die in dem Halter nach unten wies, dass die zweite Transportbahn (33, 138, 139) mit dem Auslassabschnitt (16, 17, 25—28, 133) oder dem Umkehrabschnitt (31, 32, 134, 135, 143) der Umkehreinrichtung verbunden ist, und dass ein Rückbewegungs-Bahnabschnitt (18, 19, 20, 21, 122—125) zwischen dem Auslassabschnitt der Umkehreinrichtung und der ersten Transportbahn vorgesehen ist, wobei der Auslass der Rückbewegungsbahn in der ersten Transportbahn zu der Einlassseite der Beleuchtungsstation gerichtet ist.

2. Vorrichtung für eine Originalzufuhr nach Anspruch 1, dadurch gekennzeichnet, dass eine direkte Transportverbindung (12, 13, 117, 118) zwischen dem Einlass- und dem Auslassabschnitt der Umkehreinrichtung vorgesehen ist, wodurch eine kontinuierliche Bahn (11, 12) zwischen der Einlass- und der Auslassseite der Beleuchtungsstation gebildet ist.

3. Originalzufuhrverfahren zum aufeinanderfolgenden Transport von Originalen von einem Stapel von Originalen zu der Beleuchtungsstation einer Kopiermaschine, bei dem jeweils eines der Originale von der Unterseite des Stapels entnommen wird, bei dem anfänglich jedes Original an der Beleuchtungsstation von einer Einlassseite zu einer Auslassseite vorbeitransportiert wird, um eine Seite des Originals zu kopieren, bei dem das Original von der Auslassseite zu der Einlassseite entlang einer Rückbewegungsbahn und einer Umkehrbahn zurückbewegt wird, wobei die führende und die nachlaufende Kante des Originals ausgetauchst werden, und bei dem das Original wieder an der Beleuchtungsstation in derselben richtung vorbeitransportiert wird, um die andere Seite des Originals zu kopieren und dann dieses Original zurück zu dem Stapel zu transportieren, dadurch gekennzeichnet, dass jedes Original anfänglich an der Beleuchtungsstation in einer Lage zum Kopieren der Seite des Originals vorbeitransportiert wird, welche nach unten in den Stapel wies, und dass nach dem Kopieren dieser Seite das Original von der Ausgangsseite zu der Eingangsseite der Beleuchtungsstation zurückbewegt wird, wobei zuerst die Umkehrbahn und dann die Rückbewegungsbahn durchlaufen wird.

Fig 1

Fig 2

0 021 514

Fig 3

Fig 4